# EUROPEAN PATENT APPLICATION

(11) **EP 4 535 650 A1**
(43) Date of publication of application: **09.04.2025**
(21) Application number: 23809962.6
(22) Date of filing: 03.04.2023
(51) Int. Cl.: H02P 25/064

(54) **TRANSPORT DEVICE**

(30) Priority: 25.05.2022 JP 2022085009
(71) Applicant: HITACHI HIGH-TECH CORPORATION, Tokyo 105-6409 (JP)
(72) Inventor: HOSHI, Ryosuke, Tokyo 100-8280 (JP); AOYAMA, Yasuaki, Tokyo 100-8280 (JP); KANEKO, Satoru, Tokyo 100-8280 (JP); TOKOI, Hirooki, Tokyo 100-8280 (JP); AZUMA, Shinji, Tokyo 105-6409 (JP)
(74) Representative: Strehl & Partner mbB
(86) International application number: PCT/JP2023/013774
(87) International publication number: WO 2023/228583

(57) **Abstract**

The present invention provides a conveyance apparatus that can improve sensitivity of position detection of a container carrier while preventing an increase in heat loss due to winding resistance during driving of the container carrier. The conveyance apparatus according to the invention includes a magnet provided on a conveyed object side, a magnetic pole including a tooth made of a ferromagnetic body and a winding wound outside the tooth, a yoke configured to form a magnetic circuit made of a ferromagnetic body, the magnetic circuit coupling a plurality of the magnetic poles disposed adjacent to each other, and a drive circuit configured to supply a current to the winding of the magnetic pole. A magnetic field is generated at the magnetic pole by a voltage applied by the drive circuit, and a thrust is generated at the magnet by the magnetic field to convey a conveyed object in a horizontal direction. The magnetic pole includes a first magnetic pole where a current is supplied to the winding to apply a force in a conveyance direction of the conveyed object, and at least one adjacent magnetic pole disposed adjacent to the first magnetic pole at a predetermined interval, the current is supplied to a winding of at least one magnetic pole of the adjacent magnetic pole and the winding of the first magnetic pole simultaneously, and a magnetic saturation level of the first magnetic pole is controlled by a magnetic flux generated by the at least one adjacent magnetic pole.

## Description

### Tchnical Field

The present invention relates to a conveyance apparatus, for example, a conveyance apparatus suitable for a specimen analysis system that analyzes a biological sample such as blood or urine (hereinafter referred to as a specimen) and a specimen pretreatment apparatus that performs a pretreatment required for an analysis.

### Background Art

In general, in a specimen analysis system that analyzes a biological sample such as blood, plasma, serum, urine, and other body fluids, apparatuses having a plurality of functions are connected to automatically process each step for each specimen in order to test specified analysis items. In other words, in the specimen analysis system, analysis units from a plurality of analysis fields such as biochemistry and immunology are connected by a conveyance line to collectively perform a plurality of analyses.

A conveyance method of the conveyance line includes a method using a belt conveyor and a method using an electromagnetic attractive force as a thrust.

In the method of using an electromagnetic attractive force as a thrust, a permanent magnet is provided at a container carrier such as a holder that holds a specimen, and an electromagnetic attractive force generated by supplying a current to a winding of a magnetic circuit provided at a conveyance surface is used as a thrust of the container carrier.

Further, as disclosed in PTL 1 and PTL 2, a container carrier position detection method using a magnetic saturation phenomenon of a magnetic circuit due to a magnetic flux of a permanent magnet without using any sensor such as a Hall IC has been studied.

PTL 1 discloses that a current is caused to flow only through a winding of a magnetic circuit to induce an inductance change due to magnetic saturation and thus detect a position.

Meanwhile, PTL 2 discloses a method in which, for a container carrier deviated from a conveyance path and stopped, a voltage pulse is applied to a certain coil to generate an attractive force toward a magnet provided in the container carrier, and voltage pulses are applied indiscriminately to a plurality of coils around the coil that generates the attractive force to generate a repulsive force against the magnet, thereby detecting a position of the container carrier.

### Citation List

### Patent Literature

PTL 1: WO2020/137182
PTL 2: JP2021-58052A

### Summary of Invention

### Technical Problem

However, in PTL 1, the current is caused to flow only through the winding of the magnetic circuit to induce the inductance change due to magnetic saturation and thus detect the position of the container carrier, and there is a problem that winding heat loss increases as the current is increased to cause magnetic saturation.

Meanwhile, in PTL 2, when the coils around the coil that attracts the container carrier are excited indiscriminately in a situation where the container carrier is conveyed, there is a problem that coil heat loss is excessively increased by exciting a large number of coils, and there is also a problem that a force acts on the container carrier in a direction other than an original conveyance direction and thus causes the container carrier to deviate from the conveyance path.

That is, when the container carrier is conveyed, in order to control a speed to stop at a predetermined stop position, or to avoid liquid sloshing of a specimen loaded on the container carrier or collision between container carriers, it is necessary to correctly detect the position of the container carrier and it is desirable that the current is somewhat large in order to take advantage of the magnetic saturation phenomenon, but an increase in the current leads to increased heat loss due to winding resistance.

The invention has been made in view of the above-described points, and an object thereof is to provide a conveyance apparatus that can improve sensitivity of position detection of a container carrier while preventing an increase in heat loss due to winding resistance during driving of the container carrier.

### Solution to Problem

In order to accomplish the above-described object, a conveyance apparatus according to the invention includes: a magnet provided on a conveyed object side; a magnetic pole including a tooth made of a ferromagnetic body and a winding wound outside the tooth; a yoke configured to form a magnetic circuit made of a ferromagnetic body, the magnetic circuit coupling a plurality of the magnetic poles provided adjacent to each other; and a drive circuit configured to supply a current to the winding of the magnetic pole, in which a magnetic field is generated at the magnetic pole by a voltage applied by the drive circuit, and a thrust is generated at the magnet by the magnetic field to convey a conveyed object in a horizontal direction, and
the magnetic pole includes a first magnetic pole where a current is supplied to the winding to apply a force in a conveyance direction of the conveyed object, and at least one adjacent magnetic pole provided adjacent to the first magnetic pole at a predetermined interval, the current is supplied to a winding of at least one magnetic pole of the adjacent magnetic pole and the winding of the first magnetic pole simultaneously, and a magnetic saturation level of the first magnetic pole is controlled by a magnetic flux generated by the at least one adjacent magnetic pole.

### Advantageous Effects of Invention

According to the invention, it is possible to improve sensitivity of position detection of a container carrier while preventing an increase in heat loss due to winding resistance during driving of the container carrier.

### Brief Description of Drawings

FIG. 1 shows a schematic configuration of a first embodiment of a conveyance apparatus according to the invention.
FIG. 2 shows an example of an arrangement configuration of a plurality of electromagnets in the first embodiment of the conveyance apparatus according to the invention (a comparative example (related art) also has the same configuration).
FIG. 3 is a schematic configuration diagram showing a magnetic circuit in a conveyance apparatus in the comparative example (related art).
FIG. 4 is a schematic configuration diagram showing a magnetic circuit in the first embodiment of the conveyance apparatus according to the invention.
FIG. 5 is a characteristic diagram showing a relationship between a current and a magnetic flux amount in the first embodiment of the conveyance apparatus according to the invention and the conveyance apparatus in the comparative example (related art).
FIG. 6 shows a comparison of heat loss due to winding resistance between the first embodiment of the conveyance apparatus according to the invention and the conveyance apparatus in the comparative example (related art).
FIG. 7 shows a relationship of an inductance with respect to a distance between a container carrier and an electromagnet in the first embodiment of the conveyance apparatus according to the invention.
FIG. 8 is a schematic configuration diagram showing a magnetic circuit in a second embodiment of the conveyance apparatus according to the invention.
FIG. 9 is a schematic configuration diagram showing a magnetic circuit in a third embodiment of the conveyance apparatus according to the invention.
FIG. 10 shows a relationship between a current and a magnetic flux amount in the case of the third embodiment of the conveyance apparatus according to the invention and in a case where a current is caused to flow only through an electromagnet.

### Description of Embodiments

Hereinafter, a conveyance apparatus according to the invention will be described based on shown embodiments. In each embodiment described below, the same components are denoted by the same reference numerals. The invention is not limited to the embodiments described below, and the desired effects of the invention may be obtained even when the shape, arrangement, and other configurations are changed.

### First Embodiment

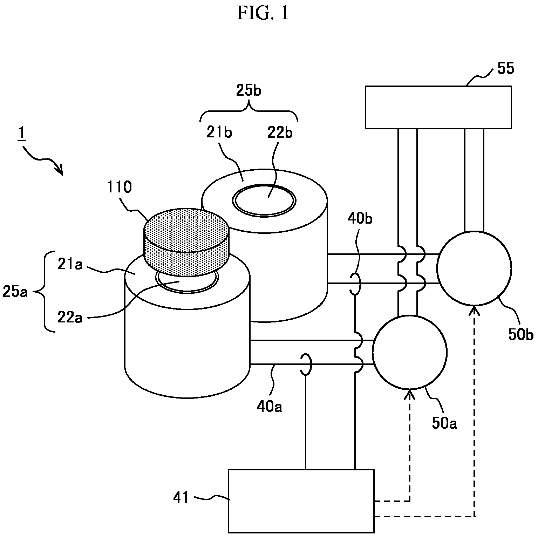

FIG. 1 shows a schematic configuration of a first embodiment of the conveyance apparatus according to the invention.

As shown in FIG. 1, a conveyance apparatus 1 in the present embodiment has a schematic configuration including a first electromagnet 25a that forms a magnetic pole, a second electromagnet 25b as an adjacent magnetic pole disposed adjacent to the first electromagnet 25a at a predetermined interval, a first drive circuit 50a and a second drive circuit 50b, a first current detection unit 40a and a first current detection unit 40b, a calculation unit 41, and a power supply 55.

The first electromagnet 25a includes a first tooth 22a formed of a magnetic body and a first winding 21a wound around an outer peripheral portion of the first tooth 22a. Similarly, the second electromagnet 25b includes a second tooth 22b and a second winding 21b wound around an outer peripheral portion of the second tooth 22b. The first tooth 22a and the second tooth 22b are cylindrical in the embodiment, but are not limited thereto, and may be prismatic, for example.

A container carrier 110, which is a conveyed object (conveyed body), is placed at upper surface portions of the first electromagnet 25a and the second electromagnet 25b in a manner that allows movement in a horizontal direction. There is a conveyance surface (not shown) between the container carrier 110 and the first electromagnet 25a or the second electromagnet 25b, and the container carrier 110 slides in the horizontal direction on this conveyance surface.

A permanent magnet (not shown) forming a magnet is provided in the container carrier 110. A neodymium alloy, ferrite, or the like is preferably used as the permanent magnet of the container carrier 110. In some cases, a soft magnetic body or the like may be used instead of the permanent magnet.

Further, examples of the container carrier 110 include a specimen holder that holds one single specimen container such as a test tube or a sample cell containing a liquid specimen, and a specimen rack that holds a plurality of specimen containers.

The first winding 21a and the second winding 21b of the first electromagnet 25a and the second electromagnet 25b are respectively connected to the first drive circuit 50a and the second drive circuit 50b.

The first electromagnet 25a and the second electromagnet 25b generate magnetic fields by voltages applied by the first drive circuit 50a and the second drive circuit 50b, respectively. These magnetic fields are generated upward from upper ends of the first tooth 22a and the second tooth 22b. The magnetic fields generated upward from the upper ends of the first tooth 22a and the second tooth 22b generate a thrust at the permanent magnet provided in the container carrier 110.

The first current detection unit 40a and the second current detection unit 40b have a function of detecting currents flowing through the first winding 21a and the second winding 21b of the first electromagnet 25a and the second electromagnet 25b from the first drive circuit 50a and the second drive circuit 50b, respectively, and transmitting current values detected by the first current detection unit 40a and the second current detection unit 40b to the calculation unit 41. The calculation unit 41 outputs, to the first drive circuit 50a and the second drive circuit 50b, a control signal for moving the container carrier 110 using the current values detected by the first current detection unit 40a and the second current detection unit 40b. Accordingly, the container carrier 110 can be conveyed to a desired position.

The first current detection unit 40a and the second current detection unit 40b may measure a voltage across a series resistor, may use a current transformer, or may use a Hall current sensor, and are not limited thereto.

The calculation unit 41 calculates, based on the current values detected by the first current detection unit 40a and the second current detection unit 40b and the like, a relative positional relationship between each of the first tooth 22a and the second tooth 22b and the container carrier 110, and calculates a position of the container carrier 110 in the conveyance apparatus 1. That is, the calculation unit 41 calculates where the container carrier 110 is supposed to be currently located in the conveyance apparatus 1. The calculation unit 41 determines, using calculated position information of the container carrier 110, a current amount necessary for driving the container carrier 110 and a timing when the current is to be supplied.

The first drive circuit 50a and the second drive circuit 50b are connected to the power supply 55, and the power supply 55 may be either AC or DC. In the case of DC, a battery may be used.

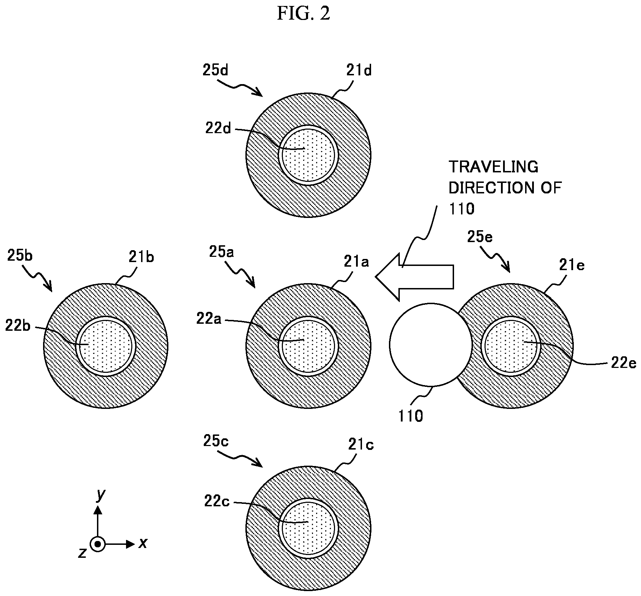

FIG. 2 shows an example of an arrangement configuration of the first electromagnet 25a, the second electromagnet 25b and a fifth electromagnet 25e that are adjacent magnetic poles disposed in a traveling direction of the container carrier 110 with respect to the first electromagnet 25a, and a third electromagnet 25c and a fourth electromagnet 25d that are adjacent magnetic poles disposed adjacent to the first electromagnet 25a in a normal direction of the container carrier 110 in the conveyance apparatus 1 in the embodiment (an arrangement configuration of electromagnets in a comparative example (related art) to be described later is also the same arrangement configuration). In FIG. 2, a yoke is not shown.

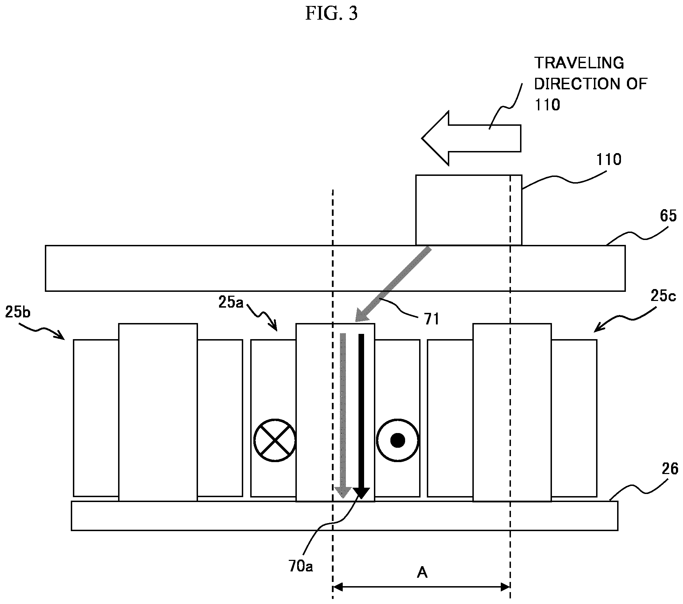

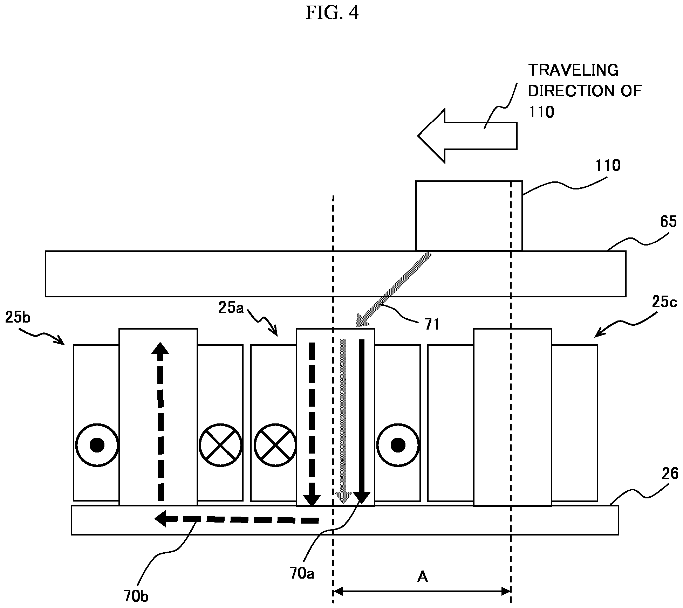

FIG. 3 is a schematic configuration diagram showing a magnetic circuit in a conveyance apparatus in the comparative example (related art), and FIG. 4 is a schematic configuration diagram showing a magnetic circuit in the conveyance apparatus 1 in the first embodiment. The first electromagnet 25a, the second electromagnet 25b, the third electromagnet 25c, the fourth electromagnet 25d, and the fifth electromagnet 25e are adjacent to one another at intervals of a pitch A.

In the comparative example shown in FIG. 3 and the first embodiment shown in FIG. 4, a position directly above the first electromagnet 25a is a target stop position, and the container carrier 110 moves on a conveyance surface 65 from the side of the third electromagnet 25c toward the first electromagnet 25a.

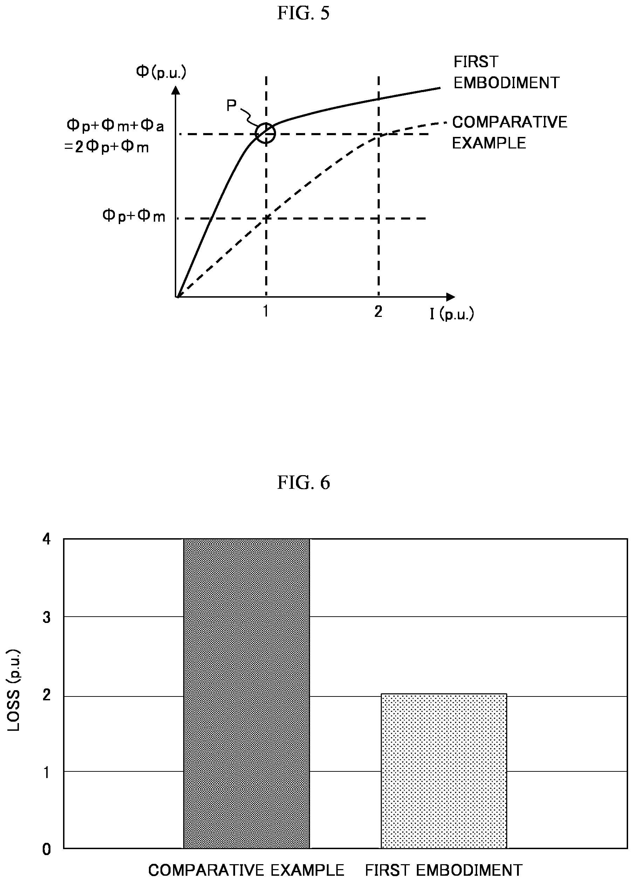

FIG. 5 is a characteristic diagram showing a relationship between a current and a magnetic flux amount in the conveyance apparatuses in the comparative example (indicated by a broken line) and the first embodiment (indicated by a solid line), and FIG. 6 shows a comparison of heat loss due to winding resistance between the conveyance apparatus in the comparative example and the conveyance apparatus 1 in the first embodiment.

In the comparative example shown in FIG. 3, a current is caused to flow only through the first electromagnet 25a located at the stop target position. At this time, a magnetic field generated by the first electromagnet 25a acts to drive the container carrier 110 leftward in FIG. 3. As the container carrier 110 moves on the conveyance surface 65, a magnetic flux 71 of the permanent magnet provided in the container carrier 110 links with the first electromagnet 25a, enhances a magnetic flux 70a generated by the first electromagnet 25a, thus the inside of the first electromagnet 25a is magnetically saturated and an inductance decreases. The position of the container carrier 110 is detected using such a change in the inductance (for example, the position of the container carrier 110 is specified by a value of the change in the inductance).

In the comparative example shown in FIG. 3, when a current of 1 p.u. flows through the first electromagnet 25a as shown in FIG. 5, magnetic saturation is insufficient, and thus a magnetic flux amount Φm + Φp (Φm is magnitude of the magnetic flux 70a, and Φp is magnitude of the magnetic flux 71 of the permanent magnet) in the first electromagnet 25a is located at a point where a rate of change between the current and the magnetic flux is linear.

This point is a portion where the inductance does not change since there is no magnetic saturation, and accordingly, it is difficult to detect the position using the change in the inductance.

In the comparative example shown in FIG. 3, when the current flowing through the first electromagnet 25a is increased to 2 p.u., the first electromagnet 25a has a magnetic flux amount of 2Φm + Φp, which operates in a region where the relationship between the current and the magnetic flux is nonlinear due to magnetic saturation and the inductance changes. Accordingly, the position can be easily detected.

However, since heat loss due to winding resistance is a product of a square of the current and resistance of the winding, as shown in FIG. 6, when the current is 2 p.u., the heat loss is 4 p.u., which is four times the heat loss when the current is 1 p.u.

In the present embodiment, the current flows through the second electromagnet 25b that is adjacent to the first electromagnet 25a shown in FIGS. 2 and 4 and is located in the conveyance direction of the container carrier 110 with respect to the first electromagnet 25a and the first electromagnet 25a simultaneously. Electromagnets adjacent to the first electromagnet 25a include the third electromagnet 25c, the fourth electromagnet 25d, and the fifth electromagnet 25e in addition to the second electromagnet 25b.

When the third electromagnet 25c or the fourth electromagnet 25d is energized, an electromagnetic force acts on the container carrier 110 in the normal direction of the conveyance direction, and thus the container carrier 110 may deviate from a conveyance path (for example, the container carrier 110 may move toward the third electromagnet 25c and the fourth electromagnet 25d), resulting in abnormal conveyance.

When a current of 1 p.u. is caused to flow through the first electromagnet 25a, a current of 1 p.u. in an opposite direction is caused to flow through the second electromagnet 25b. The magnetic flux 70b generated by the second electromagnet 25b links with the first electromagnet 25a via a yoke 26 forming a magnetic circuit which also serves as a base of the electromagnet (see a downward dashed arrow indicating a magnetic flux flowing through the first electromagnet 25a in FIG. 4), and enhances the magnetic flux 70a generated by the first electromagnet 25a and the magnetic flux 71 of the permanent magnet.

At this time, the magnetic flux amount in the first electromagnet 25a is Φm + Φp + Φa = 2Φm + Φp for a total current of 1 p.u. A point of this sum (indicated by P in FIG. 5) is a point where the relationship between the current and the magnetic flux in FIG. 5 is nonlinear due to magnetic saturation and the inductance changes. Accordingly, the position of the container carrier 110 can be easily detected.

At this time, the heat loss due to the winding resistance is 1 p.u. for each of the first electromagnet 25a and the second electromagnet 25b, which is a total of 2 p.u. Accordingly, the heat loss can be halved as compared with the case of the comparative example in which the current flows only through the first electromagnet 25a.

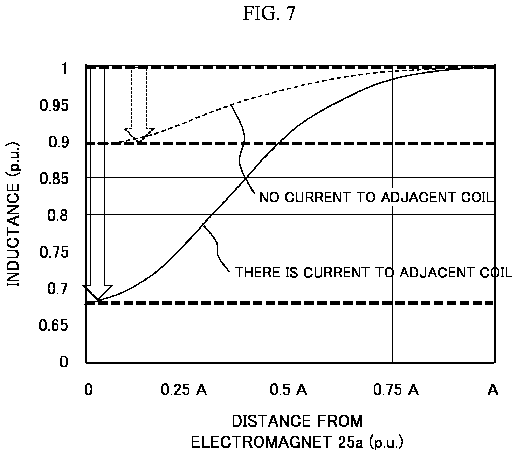

FIG. 7 shows a relationship of the inductance with respect to a distance between the container carrier 110 and the first electromagnet 25a in the first embodiment of the conveyance apparatus 1 according to the invention, where a broken line indicates a case where no current flows to an adjacent coil, and a solid line indicates a case where a current flows through the adjacent coil.

As shown in FIG. 7, in the first embodiment in FIG. 4, when no current flows to the adjacent coil, the inductance changes from 1 p.u. to about 0.89 p.u., and when the adjacent coil is energized, the inductance changes from 1 p.u. to about 0.68 p.u., indicating that an amount of change in the inductance with respect to the position of the container carrier 110 increases and sensitivity of position detection of the container carrier 110 is improved.

As described above, the magnetic flux amount of the first electromagnet 25a for position detection of the container carrier 110 is controlled using the second electromagnet 25b adjacent in the traveling direction of the container carrier 110 (perform control to increase or decrease the current flowing through the second electromagnet 25b), and thus it is possible to improve the sensitivity of position detection while reducing heat loss without causing the container carrier 110 to deviate from the conveyance path.

Further, since the current in the direction opposite to that of the first electromagnet 25a flows through the second electromagnet 25b, a magnetic field that generates a repulsive force against the permanent magnet provided in the container carrier 110 is generated, and this magnetic field acts as a braking force that prevents the container carrier 110 from passing over the first electromagnet 25a that is the stop target position.

According to this embodiment, during driving of the container carrier 110, the sensitivity of position detection of the container carrier 110 in a sensorless position detection method using the magnetic saturation phenomenon can be improved while preventing an increase in the heat loss due to the winding resistance.

### Second Embodiment

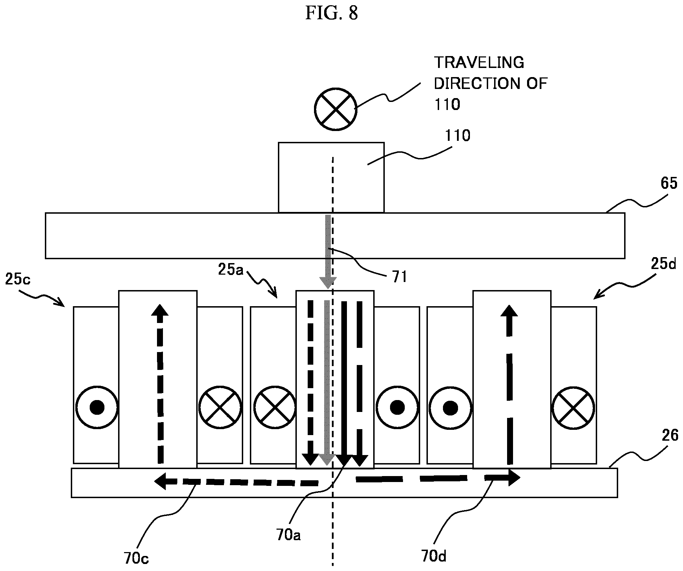

FIG. 8 is a schematic configuration diagram showing a magnetic circuit in the conveyance apparatus 1 according to a second embodiment of the invention.

In the second embodiment shown in FIG. 8, when the first electromagnet 25a in FIG. 2 is the stop target position and a current flows from the third electromagnet 25c adjacent to the first electromagnet 25a in the normal direction of the traveling direction of the container carrier 110 toward the first electromagnet 25a to drive the container carrier 110 on the conveyance surface 65, currents in a direction opposite to the current flowing through the first electromagnet 25a are caused to flow through both the adjacent third electromagnet 25c and the fourth electromagnet 25d disposed adjacent to the first electromagnet 25a in the normal direction of the traveling direction of the container carrier 110. At this time, it is desirable that the currents flowing through the third electromagnet 25c and the fourth electromagnet 25d have the same magnitude.

Accordingly, a magnetic field generated by the third electromagnet 25c and the fourth electromagnet 25d acts on the container carrier 110, and an electromagnetic force acts in the normal direction relative to the conveyance direction of the container carrier 110, and by causing the same current to flow through the third electromagnet 25c and the fourth electromagnet 25d, electromagnetic forces acting in the normal direction of the conveyance direction of the container carrier 110 are equal and offset.

Accordingly, the magnitude of the electromagnetic force acting in the normal direction of the conveyance direction of the container carrier 110 is apparently zero, and thus it is possible to improve the sensitivity of position detection without causing the container carrier 110 to deviate from the conveyance path.

As shown in FIG. 8, magnetic fluxes generated by the third electromagnet 25c and the fourth electromagnet 25d link with the first electromagnet 25a via the yoke 26. At this time, the magnetic flux 70a generated by the first electromagnet 25a, a magnetic flux 70c generated by the third electromagnet 25c, a magnetic flux 70d generated by the fourth electromagnet 25d, and the magnetic flux 71 of the permanent magnet have the same direction, and thus are enhanced.

In this embodiment, a current of 0.5 p.u. flows through the first electromagnet 25a, a current of 0.25 p.u. flows through the third electromagnet 25c, and a current of 0.25 p.u. flows through the fourth electromagnet 25d. A magnetic flux amount linked with the first electromagnet 25a is Φm + Φp + 0.5Φa × 2 = 2Φm + Φp for a total current of 1 p.u., which operates at a point where the inductance changes due to magnetic saturation shown in the relationship between the current and the magnetic flux in FIG. 5. Total heat loss due to resistance of the winding at this time is 0.375 p.u. Although the same magnetic flux amount can be obtained by causing a current of 2 p.u. to flow through the first electromagnet 25a, the heat loss becomes 4 p.u., which indicates a large increase in the heat loss.

As described above, by supplying currents to both the third electromagnet 25c and the fourth electromagnet 25d that are adjacent to the first electromagnet 25a, which performs the position detection of the container carrier 110, in the normal direction of the conveyance direction of the container carrier 110, it is possible to improve the sensitivity of position detection of the container carrier 110 while reducing heat loss without causing the container carrier 110 to deviate from the conveyance path.

### Third Embodiment

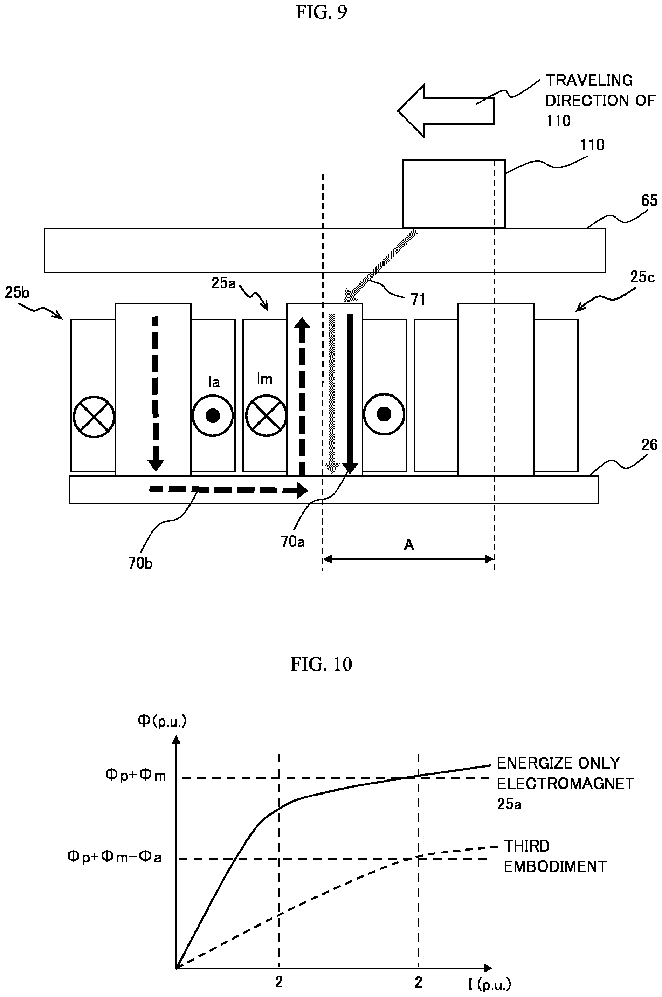

FIG. 9 is a schematic configuration diagram showing a magnetic circuit in the conveyance apparatus 1 in a third embodiment of the invention.

In the third embodiment shown in FIG. 9, a current in the same direction as the current flowing through the first electromagnet 25a flows through the second electromagnet 25b. At this time, since the magnetic flux 70a generated by the first electromagnet 25a and the magnetic flux 70b generated by the second electromagnet 25b cancel each other out in opposite directions, the magnetic flux amount of the first electromagnet 25a can be reduced.

FIG. 10 shows a relationship between the current and the magnetic flux in a case where the current is caused to flow only through the first electromagnet 25a (shown by a solid line) and in the case of the third embodiment (shown by a broken line).

As shown in FIG. 10, in the third embodiment in FIG. 9, when a current of 1 p.u. is caused to flow only through the first electromagnet 25a, the magnetic flux amount in the first electromagnet 25a is Φm + Φp, and due to excessive magnetic saturation, the change in the inductance is small, making it difficult to detect the position of the container carrier 110.

Therefore, by energizing the second electromagnet 25b with a current in the same direction as the current flowing through the first electromagnet 25a, the magnetic flux amount is reduced to Φm + Φp - Φa, and the relationship between the current and the magnetic flux is nonlinear, which operates at a point where the inductance changes, making it easier to detect the position of the container carrier 110.

As described above, the sensitivity of position detection of the container carrier 110 can be improved by reducing the magnetic flux amount of the first electromagnet 25a that performs position detection of the container carrier 110 by the adjacent second electromagnet 25b.

When the container carrier 110 passes through the first electromagnet 25a and moves directly above the second electromagnet 25b, in the case where the current flows only through the first electromagnet 25a, a current starts to flow through the second electromagnet 25b after the current of the first electromagnet 25a becomes 0, and thus an electromagnetic force acting on the container carrier 110 (a force that drives the container carrier 110) decreases when an energized magnetic pole is switched. Since a speed decreases as the electromagnetic force decreases, it is necessary to increase the current in order to return the speed to a speed before switching the magnetic pole. Since the current is increased, the heat loss increases. In addition, a fluctuation in the electromagnetic force increases a risk of liquid spillage due to liquid sloshing of a specimen.

However, in the third embodiment in FIG. 9, by causing the current to flow through the second electromagnet 25b simultaneously with the current flowing through the first electromagnet 25a, even when the current in the first electromagnet 25a becomes 0 at a moment when the container carrier 110 passes the first electromagnet 25a, the electromagnetic force acts on the container carrier 110 due to the second electromagnet 25b, and thus reduction in the force for driving the container carrier 110 can be prevented. That is, the current for returning to the original speed is increased and liquid sloshing is prevented.

The invention is not limited to the embodiments described above, and includes various modifications.

For example, the embodiments described above have been described in detail to facilitate understanding of the invention, and the invention is not necessarily limited to those including all the configurations described above. A part of a configuration of a certain embodiment can be replaced with a configuration of another embodiment, and a configuration of another embodiment can be added to a configuration of a certain embodiment. A part of a configuration of each embodiment may be added to, deleted from, or replaced with another configuration.

### Reference Signs List

1... conveyance apparatus
21a... first winding
21b... second winding
22a... first tooth
22b... second tooth
25a... first electromagnet
25b... second electromagnet
25c... third electromagnet
25d... fourth electromagnet
25e... fifth electromagnet
26... yoke
40a... first current detection unit
40b... second current detection unit
41... calculation unit
50a... first drive circuit
50b... second drive circuit
55... power supply
65... conveyance surface
70a... magnetic flux generated by first electromagnet
70b... magnetic flux generated by second electromagnet
70c... magnetic flux generated by third electromagnet
70d... magnetic flux generated by fourth electromagnet
71... magnetic flux of permanent magnet
110... container carrier

## Claims

1. A conveyance apparatus comprising:
a magnet provided on a conveyed object side;
a magnetic pole including a tooth made of a ferromagnetic body and a winding wound outside the tooth;
a yoke configured to form a magnetic circuit made of a ferromagnetic body, the magnetic circuit coupling a plurality of the magnetic poles disposed adjacent to each other; and
a drive circuit configured to supply a current to the winding of the magnetic pole, wherein
a magnetic field is generated at the magnetic pole by a voltage applied by the drive circuit, and a thrust is generated at the magnet by the magnetic field to convey a conveyed object in a horizontal direction, and
the magnetic pole includes a first magnetic pole where a current is supplied to the winding to apply a force in a conveyance direction of the conveyed object, and at least one adjacent magnetic pole disposed adjacent to the first magnetic pole at a predetermined interval, the current is supplied to a winding of at least one magnetic pole of the adjacent magnetic pole and the winding of the first magnetic pole simultaneously, and a magnetic saturation level of the first magnetic pole is controlled by a magnetic flux generated by the at least one adjacent magnetic pole.

2. The conveyance apparatus according to claim 1, wherein
the at least one adjacent magnetic pole is a second magnetic pole disposed in a traveling direction of the conveyed object with respect to the first magnetic pole, the current is supplied to a winding of the second magnetic pole and the winding of the first magnetic pole simultaneously, and the magnetic saturation level of the first magnetic pole is controlled by a magnetic flux generated by the second magnetic pole.

3. The conveyance apparatus according to claim 2, wherein
a current in a direction opposite to that of the current supplied to the first magnetic pole is supplied to the second magnetic pole.

4. The conveyance apparatus according to claim 3, wherein
the current supplied to the second magnetic pole is equal in magnitude to the current supplied to the first magnetic pole.

5. The conveyance apparatus according to claim 2, wherein
a current in the same direction as the current supplied to the first magnetic pole is supplied to the second magnetic pole.

6. The conveyance apparatus according to claim 1, wherein
the at least one adjacent magnetic pole is third and fourth magnetic poles disposed adjacent to the first magnetic pole in a normal direction of a traveling direction of the conveyed object, the current is supplied to a winding of each of the third and fourth magnetic poles and the winding of the first magnetic pole simultaneously, and the magnetic saturation level of the first magnetic pole is controlled by a magnetic flux generated by the third and fourth magnetic poles.

7. The conveyance apparatus according to claim 6, wherein
a current in the same direction as the current supplied to the first magnetic pole is supplied to the third and fourth magnetic poles.

8. The conveyance apparatus according to claim 7, wherein
the current supplied to the third and fourth magnetic poles is equal in magnitude to the current supplied to the first magnetic pole.

9. The conveyance apparatus according to any one of claims 1 to 8, wherein
the conveyed object is held by a container carrier, the magnet is a permanent magnet provided in the container carrier, and the magnetic pole is an electromagnet.

10. The conveyance apparatus according to claim 9, further comprising:
a current detection unit configured to detect a current flowing through a winding of the electromagnet from the drive circuit; and
a calculation unit configured to output, to the drive circuit, a control signal for moving the container carrier based on a current value detected by the current detection unit.

11. The conveyance apparatus according to claim 9, further comprising:
a current detection unit configured to detect a current flowing through a winding of the electromagnet from the drive circuit; and
a calculation unit configured to calculate a relative positional relationship between the tooth and the container carrier based on a current value detected by the current detection unit and to calculate a position of the container carrier in the conveyance apparatus.

12. The conveyance apparatus according to claim 11, wherein
the calculation unit determines, using calculated position information of the container carrier, a current amount necessary for driving the container carrier and a timing when the current is to be supplied.
